# EUROPEAN PATENT APPLICATION

(11) **EP 4 539 415 A1**
(43) Date of publication of application: **16.04.2025**
(21) Application number: 23829490.4
(22) Date of filing: 13.03.2023
(51) Int. Cl.: H04L 41/0668

(54) **CLOUD TECHNOLOGY-BASED FAULT HANDLING METHOD, CLOUD MANAGEMENT PLATFORM AND RELATED DEVICE**

(30) Priority: 30.06.2022 CN 202210762448; 30.09.2022 CN 202211214539
(71) Applicant: Huawei Cloud Computing Technologies Co., Ltd., Guiyang, Guizhou 550025 (CN)
(72) Inventor: WEN, Jiajia, Guiyang, Guizhou 550025 (CN); YUE, Yu, Guiyang, Guizhou 550025 (CN); CHEN, Longfei, Guiyang, Guizhou 550025 (CN); JIANG, Tao, Guiyang, Guizhou 550025 (CN)
(74) Representative: Körber, Martin Hans
(86) International application number: PCT/CN2023/081036
(87) International publication number: WO 2024/001299

(57) **Abstract**

Embodiments of this application disclose a cloud technology-based fault processing method, a cloud management platform, and a related device, to reduce a blast radius of a fault, and ensure normal running of a cloud service. The method in embodiments of this application is applied to the cloud service. A cloud service architecture includes at least a first service deck, the first service deck includes at least a first service grid and a second service grid, and the first service grid and the second service grid store same cloud service data. The method includes: receiving a first call request sent by a tenant, and determining that the call request corresponds to the first service deck; and when the first service grid is faulty, forwarding the first call request to the second service grid in a normal working state.

## Description

This application claims priorities to Chinese Patent Application No. CN202210762448.1, filed with the China National Intellectual Property Administration on June 30, 2022 and entitled "CLOUD COMPUTING GENERAL COMPONENT AND CLUSTER DIVISION METHOD FOR SUPPORTING CONTROL OF BLAST RADIUS", and to Chinese Patent Application No. CN202211214539.8, filed with the China National Intellectual Property Administration on September 30, 2022 and entitled "CLOUD TECHNOLOGY-BASED FAULT PROCESSING METHOD, CLOUD MANAGEMENT PLATFORM, AND RELATED DEVICE", both of which are incorporated herein by reference in their entireties.

### TECHNICAL FIELD

This application relates to the field of cloud computing, and in particular, to a cloud technology-based fault processing method, a cloud management platform, and a related device.

### BACKGROUND

With continuous development of cloud computing technologies, a quantity of devices in a single cloud computing service region (region) is increasing, and even exceeds millions of devices. In this case, if single cloud service software crashes, a specific cloud service in the entire region is unavailable.

In a cloud service processing method, a region is divided into several cells (cells), and each cell is a self-contained service system that can run independently. In addition, tenants are divided, to enable each cell to correspond to some tenants. If a fault occurs in a specific cell, a service corresponding to the cell is unavailable, and consequently a service cannot be provided for a tenant corresponding to the cell.

### SUMMARY

This application provides a cloud technology-based fault processing method, a cloud management platform, and a related device. In the cloud technology-based fault processing method, a cloud service architecture includes a first service deck, the first service deck includes a plurality of service grids, and a plurality of service grids at a same service deck store same cloud service data. The cloud management platform receives a first call request sent by a tenant, and determines that the first call request corresponds to the first service deck. If a faulty occurs in a first service grid at the first service deck, the call request may be forwarded to a second service grid in a normal working state at the same service deck for processing, thereby reducing a blast radius of the fault, and ensuring normal running of a cloud service.

A first aspect of this application provides a cloud technology-based fault processing method, including:

A cloud service architecture provided by a cloud management platform includes at least a first service deck, and the first service deck includes at least a first service grid and a second service grid. The first service grid and the second service grid store same cloud service data. The cloud service data refers to data related to a cloud service provided by the cloud management platform, including tenant information (for example, an account and a password), authentication information (a verification code), and other information that needs to be used in a process of calling the cloud service. This is not specifically limited herein. In a process of using the cloud service provided by the cloud management platform, a tenant initiates a call request, that is, the cloud management platform receives a first call request from the tenant, and the first call request corresponds to the first service deck. If the first service grid at the first service deck is faulty, it means that the first service grid cannot provide the cloud service, and cannot process the first call request. Therefore, when it is determined that the first service grid at the first service deck is faulty, the cloud management platform forwards the first call request to the second service grid in a normal working state at the first service deck.

It can be learned from the foregoing technical solutions that this application has the following advantages: A plurality of service grids at a same service deck store same cloud service data. The cloud management platform receives the first call request sent by the tenant, and determines that the first call request corresponds to the first service deck. If a faulty occurs in the first service grid at the first service deck, the call request may be forwarded to the second service grid in the normal working state at the same service deck for processing, thereby reducing a blast radius of the fault, and ensuring normal running of the cloud service.

In a possible implementation of the first aspect, the cloud management platform may further store and update state information corresponding to each service deck. The state information indicates whether each service grid at the service deck is faulty. When determining that the first service grid is faulty, the cloud management platform updates state information corresponding to the first service deck at which the first service grid is located. The updated state information indicates that the first service grid is faulty. The cloud management platform forwards, based on the updated state information corresponding to the first service grid, the first call request to the second service grid in the normal working state.

Based on the foregoing method, when a service grid is faulty, the cloud management platform updates state information of a service deck corresponding to the service grid, and forwards a call request based on the updated state information, to avoid service unavailability caused by forwarding the call request to the faulty service grid. In other words, an implementation basis is provided for reducing an impact range of the fault, and implementability of the technical solutions of this application is improved.

In a possible implementation of the first aspect, the first call request sent by the tenant carries an identifier of the tenant, and the identifier is used to uniquely indicate the tenant. Before forwarding the first call request to the second service grid, the cloud management platform can determine, based on the identifier of the tenant carried by the first call request and a mapping relationship between the identifier and a service deck, that the tenant corresponds to the first service deck, that is, determine that the first call request corresponds to the first service deck. That is, it is determined that the first call request sent by the tenant needs to be forwarded to a service grid at the first service deck. In other words, the call request initiated by the tenant carries the identifier of the tenant, and there is the mapping relationship between the identifier of the tenant and the service deck, so that the cloud management platform can map call requests initiated by different tenants to respective service decks.

Based on the foregoing method, the cloud management platform can perform track routing on tenants, and determine, by using a tenant identifier, a service deck corresponding to a call request initiated by each tenant, so that fault isolation between service decks can also reduce a blast radius of a fault to some extent.

In a possible implementation of the first aspect, after the cloud platform determines that the first call request corresponds to the first service deck, if each service grid at the first service deck is in a normal working state, the cloud platform sends the first call request to the first service grid. Optionally, the first service grid herein may be a service grid that is at the first service deck and that is closest to an address location of the tenant or that has a minimum network latency with the tenant. This is not specifically limited herein.

Based on the foregoing method, when the plurality of service grids at the first service deck are in a normal working state, the cloud management platform may select a service grid that is closest to a tenant address location to forward the call request, to improve reliability of the cloud service; or the cloud management platform selects a service grid with a lowest network latency to forward the call request, to improve efficiency and a response speed of the cloud service.

In a possible implementation of the first aspect, the cloud management platform may provide a configuration interface for the tenant, where the configuration interface is used to obtain the cloud service that is input or selected by the tenant. That is, the cloud service provided by the cloud management platform may match an actual requirement of the tenant, and is applicable to a condition or selection input by the tenant.

Based on the foregoing method, the cloud service provided by the cloud management platform can flexibly adapt to a requirement of the tenant, thereby enriching application scenarios of the technical solutions of this application, and improving practicability.

In a possible implementation of the first aspect, the cloud management platform can determine, in a plurality of manners, whether a service grid is faulty. The cloud management platform sends detection information to the first service grid for a plurality of consecutive times. The detection information is used to detect a state of the first service grid. The state of the first service grid refers to whether the first service grid is faulty. If the cloud management platform receives abnormal response information from the first service grid for a plurality of consecutive times, the cloud management platform determines that the first service grid is faulty; or if the cloud management platform does not receive response information from the first service grid within a preset time period for a plurality of consecutive times, the cloud management platform determines that the first service grid is faulty.

Based on the foregoing method, the cloud management platform determines, in a plurality of manners, whether the first service grid is faulty, thereby enriching implementations of the technical solutions of this application. In addition, the cloud management platform needs to detect the service grid fault for a plurality of consecutive times, so that an occasional situation (for example, a network is temporarily unstable) can be avoided from being considered as a service grid fault, thereby improving accuracy of fault detection.

In a possible implementation of the first aspect, the cloud service includes an elastic cloud service, a cloud hard disk service, a virtual private cloud service, a cloud database service, or a distributed cache service.

Based on the foregoing method, the cloud management platform can provide a plurality of types of cloud services, thereby better meeting a diversity of tenant service development.

In a possible implementation of the first aspect, the cloud management platform may further receive a second call request sent by the tenant. The second call request corresponds to the first service deck. A cloud service corresponding to the second call request may be the same as or different from the cloud service corresponding to the first call request. This is not specifically limited herein. The cloud management platform determines current state information of the first service deck, and when the current state information of the first service deck indicates that the plurality of service grids are in a normal working state, determines a target service grid from the plurality of service grids, and forwards the second call request to the target service grid. Optionally, the target service grid is a service grid that is in the plurality of service grids and that is closest to a tenant location or has a lowest latency. This is not specifically limited herein.

Based on the foregoing method, when the plurality of service grids at the first service deck are in a normal working state, the cloud management platform may select a service grid that is closest to a tenant location to forward the call request, to improve reliability of the cloud service; or the cloud management platform selects a service grid with a lowest latency to forward the call request, to improve efficiency and a response speed of the cloud service.

A second aspect of this application provides a cloud management platform. A cloud service architecture provided by the cloud management platform includes at least a first service deck, the first service deck includes at least a first service grid and a second service grid, and the first service grid and the second service grid store same cloud service data. The cloud management platform includes: a transceiver module, configured to receive a first call request sent by a tenant; and a processing module, configured to determine that the first call request corresponds to the first service deck. The transceiver module is further configured to: when the first service grid is faulty, forward the first call request to the second service grid. The second service grid is in a normal working state.

The second aspect or any implementation of the second aspect is an apparatus implementation corresponding to the first aspect or any implementation of the first aspect. The description in the first aspect or any implementation of the first aspect is applicable to the second aspect or any implementation of the second aspect. Details are not described herein again.

A third aspect of this application provides a computing device cluster, including at least one computing device. Each computing device includes a processor and a memory, and a processor of the at least one computing device is configured to execute instructions stored in a memory of the at least one computing device, to enable the computing device cluster to implement the method disclosed in the first aspect or any possible implementation of the first aspect.

A fourth aspect of this application provides a computer program product including instructions. When the instructions are run by a computer device cluster, the computer device cluster is enabled to implement the method disclosed in the first aspect or any possible implementation of the first aspect.

A fifth aspect of this application provides a computer-readable storage medium, including computer program instructions. When the computer program instructions are executed by a computing device cluster, the computing device cluster is enabled to perform the method disclosed in the first aspect or any possible implementation of the first aspect.

Beneficial effects shown in the second aspect to the fifth aspect of this application are similar to those of the first aspect and any possible implementation of the first aspect. Details are not described herein again.

### BRIEF DESCRIPTION OF DRAWINGS

FIG. 1 is a diagram of an architecture of a cloud technology-based fault processing method according to an embodiment of this application;
FIG. 2 is a diagram of a service deck and a cloud service grid according to an embodiment of this application;
FIG. 3 is a schematic flowchart of a cloud technology-based fault processing method according to an embodiment of this application;
FIG. 4 is a diagram of data synchronization according to an embodiment of this application;
FIG. 5 is another diagram of data synchronization according to an embodiment of this application;
FIG. 6 is a diagram of an interface of a cloud management platform according to an embodiment of this application;
FIG. 7 is a diagram of another interface of a cloud management platform according to an embodiment of this application;
FIG. 8 is a diagram of a cloud service architecture according to an embodiment of this application;
FIG. 9 is a diagram of a structure of a computing device according to an embodiment of this application;
FIG. 10 is a diagram of a structure of a cloud management platform according to an embodiment of this application;
FIG. 11 is a diagram of another structure of a computing device according to an embodiment of this application; and
FIG. 12 is a diagram of a structure of a computing device cluster according to an embodiment of this application.

### DESCRIPTION OF EMBODIMENTS

This application provides a cloud technology-based fault processing method, a cloud management platform, and a related device. In the cloud technology-based fault processing method, a cloud service architecture includes a plurality of service decks, each service deck includes a plurality of service grids, and a plurality of service grids at a same service deck store same cloud service data. The cloud management platform receives a first call request sent by a tenant, and determines that the first call request corresponds to a first service deck. If a first service grid at the first service deck is faulty, the first call request may be forwarded to a second service grid at the same service deck for processing, thereby reducing a blast radius of the fault, and ensuring normal running of the cloud service.

The following describes embodiments of this application with reference to the accompanying drawings. Persons of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

To facilitate understanding of embodiments of the present invention, some terms in the present invention are first explained.

Region (region): A region is divided based on a geographical location and a network latency. One resource pool (which can be considered as common services such as shared elastic computing, block storage, object storage, a virtual private cloud (virtual private cloud, VPC) network, an elastic public network internet protocol (internet protocol, IP), and imaging) is used in one same region.

Availability zone (availability zone, AZ): An AZ is a collection of one or more data centers. An AZ has independent water and electricity. In an AZ, computing, network, and storage resources can be logically divided into a plurality of clusters. A plurality of AZs in a region are interconnected through high-speed optical fibers, to meet a tenants' requirement for constructing a high availability system across AZs. The data center is based on a cloud computing architecture, and couples computing, storage, and network resources. A plurality of servers are disposed in a cloud data center, and computing, network, and storage resources are provided for different tenants in a manner of mutual isolation by using a virtualization technology and by using computing capabilities provided by the plurality of servers and network and storage resources.

Cloud management platform: The cloud management platform provides an access interface (such as an interface or an application programming interface (application programming interface, API)). A tenant can operate a remote client access interface to register a cloud account and password on the cloud management platform and log in to the cloud management platform. After the cloud account and password are authenticated by the cloud management platform, the tenant can select and purchase a virtual machine of a specific specification (processor, memory, or disk) on the cloud management platform. After the purchasing is successful, the cloud management platform provides a remote login account and password for the purchased virtual machine, a client can remotely log in to the virtual machine, and install and run the tenant's applications on the virtual machine. Based on logical functions, the cloud management platform can be divided into a tenant console, a computing management service, a network management service, a storage management service, an authentication service, and an image management service. The tenant console provides an interface or an API to interact with a tenant. The computing management service is used for managing servers and bare metal servers running a virtual machine and a container. The network management service is used for managing network services (such as a gateway and a firewall). The storage management service is used for managing storage services (such as a data bucket service). The authentication service is used for managing an account and password of a tenant. The image management service is used for managing a virtual machine image. The cloud management platform client can implement the following functions: receiving a control plane command sent by the cloud management platform, creating a virtual machine on the server based on the control plane control command, and performing full life cycle management on the virtual machine. Therefore, a tenant or administrator can create, manage, log in to, and operate a virtual machine in a cloud data center through the cloud management platform. The virtual machine may also be referred to as a elastic compute service (elastic compute service, ECS), an elastic instance, or the like. This is not specifically limited herein.

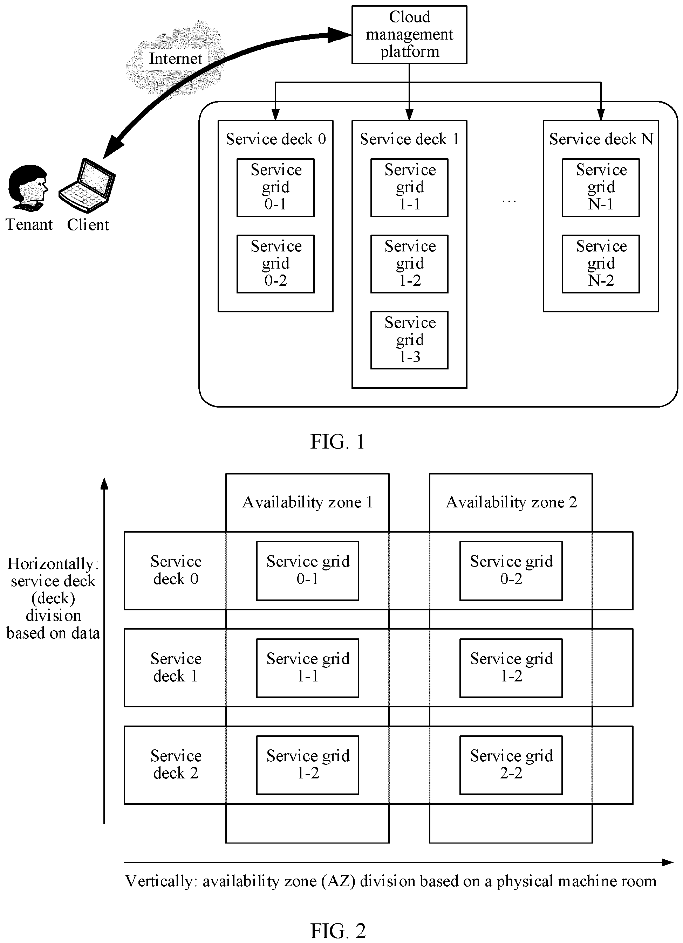

FIG. 1 is a diagram of an architecture of a cloud technology-based fault processing method according to an embodiment of this application.

As shown in FIG. 1, a cloud service architecture provided by a cloud management platform includes a plurality of service decks (decks), and each service deck includes a plurality of service grids (grids). The service deck may be understood as a logical set obtained through division based on data. For example, in cloud computing, a tenant dimension may be selected, and tenants are divided into different service deck slices based on a specific combination attribute. That is, one service deck corresponds to a batch of tenants with a same attribute. It should be noted that, quantities of service grids included in different service decks may be the same or may be different. This is not specifically limited herein. As a cell of software change and deployment, each service grid at a service deck has a complete service capability of completing a service deck slice.

As shown in FIG. 1, a tenant purchases a cloud service on the cloud management platform by using a client, and the tenant sends a call request to the cloud management platform. The call request is used to request the cloud service from the cloud management platform. The cloud management platform determines, based on a tenant identifier carried in the call request and a mapping relationship between the tenant identifier and a service deck, a service deck corresponding to the call request. Then, the call request is forwarded, based on state information corresponding to the service deck, to a service grid in a normal working state in the service grids.

The state information corresponding to the service deck indicates whether each service grid corresponding to the service deck is faulty. The cloud management platform periodically detects a state of each service grid, and updates state information of a corresponding service deck when a state of the service grid changes. The state change of the service grid includes: changing the service grid from a faulty state to a normal working state, or changing the service grid from a normal working state to a faulty state. Because the cloud management platform detects and updates a state of each service deck, when a service grid that provides the cloud service is faulty, the cloud management platform switches the service grid that provides the cloud service to a service grid that is in a normal working state and that is at the same service deck, so as to implement fault isolation, reduce a blast radius of the fault (that is, an impact range of the fault), and ensure smooth running of the cloud service.

It should be noted that, the cloud management platform may be deployed on a computing device, and the computing device may have a plurality of device forms, including a switch, a router, a chip, or the like. This is not specifically limited herein. The switch or the router may be a physical network element, or may be a virtual network element (that is, a combination of one or more functional modules implemented by pure software). This is not specifically limited herein.

In this application, in principle, service grid division is based on a computer cluster in which faults do not affect each other. The cluster herein includes a machine room, an AZ, a cabinet, a virtual machine cluster in which a fault is isolated, and the like. This is not specifically limited herein.

For example, an intersection set of a service deck and an AZ may be used as a service grid. FIG. 2 is a diagram of a service deck and a service grid according to an embodiment of this application.

As shown in FIG. 2, in a vertical dimension, a region has a plurality of AZs with independent wind, fire, water, and electricity, and the AZs are obtained through division. In a horizontal dimension, decks can be obtained through division based on specific data. In this way, an intersection of the deck and the AZ is a grid. For example, an intersection set of a deck 0 and an AZ 1 shown in FIG. 2 is a grid 0-1. Fault isolation between grids is implemented based on the division manner shown in FIG. 2.

In this embodiment of this application, the architecture shown in FIG. 2 is referred to as a service grid architecture (grid architecture), and is a cloud computing infrastructure architecture that is widely applicable to public cloud, private cloud, and industry cloud scenarios and that reduces an impact surface (that is, a fault blast radius) of a service fault.

It should be noted that, FIG. 2 is merely an example of service grid division. In actual application, the cloud management platform may further provide more or fewer service decks, and each service deck may further include more service grids. This is not specifically limited herein.

The following describes a process of a cloud technology-based fault processing method provided in an embodiment of this application by using an example in which a cloud service architecture provided by a cloud management platform includes a first service deck, and the first service deck includes a first service grid and a second service grid.

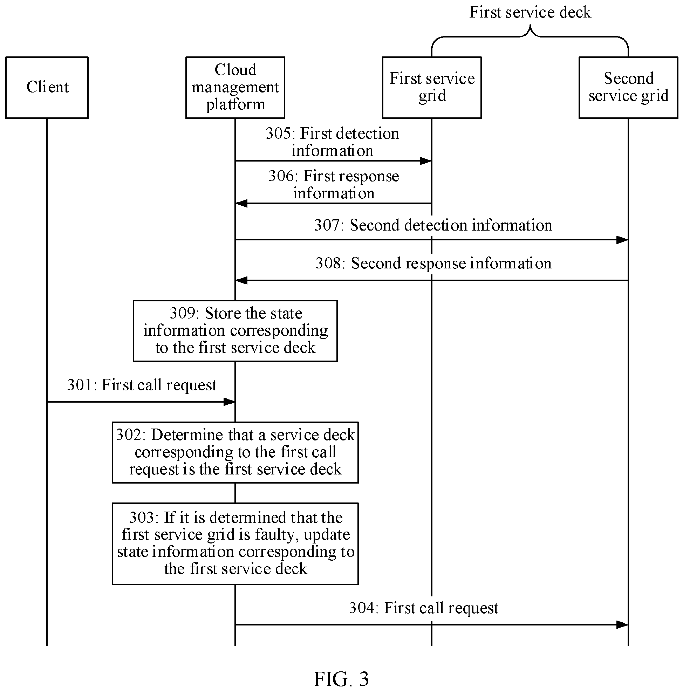

FIG. 3 is a schematic flowchart of a cloud technology-based fault processing method according to an embodiment of this application, including the following steps.

301: A cloud management platform receives a first call request from a client.

A tenant sends the first call request to the cloud management platform through the client. The first call request is used to request a cloud service provided by the cloud management platform.

302: The cloud management platform determines that a service deck corresponding to the first call request is a first service deck.

The first call request carries an identifier of the tenant, and the identifier is used to uniquely indicate the tenant. The cloud management platform can determine, based on the identifier of the tenant carried in the first call request and a mapping relationship between the identifier and a service deck, that the tenant corresponds to the first service deck. That is, it is determined that the first call request sent by the tenant needs to be forwarded to a service grid at the first service deck.

It should be noted that, in actual application, there are a plurality of possibilities for a tenant identifier used to uniquely indicate a tenant, and the tenant identifier may be an internet protocol (internet protocol, IP) address or a media access control (media access control, MAC) address. In addition, the identifier may be another identifier that has a unique indication function, for example, an identity card number, a mobile phone number, or a combination of an enterprise code and an employee number. This is not specifically limited herein.

Based on the foregoing method, the cloud management platform can store the mapping relationship between the identifier of the tenant and the service deck, so that the cloud management platform can map call requests initiated by different tenants to respective service decks, perform track routing on the tenants, and determine, by using a tenant identifier, a service deck corresponding to a call request initiated by each tenant, to implement fault isolation between service deck, and reduce a blast radius of a fault to some extent.

303: If it is determined that a first service grid is faulty, the cloud management platform updates state information corresponding to the first service deck.

The cloud management platform may further store and update state information corresponding to each service deck. The state information indicates whether each service grid at a service deck is faulty. When determining that the first service grid is faulty, the cloud management platform updates the state information corresponding to the first service deck at which the first service grid is located. The updated state information indicates that the first service grid is faulty.

In some optional implementations, the cloud management platform can determine, in a plurality of manners, whether a service grid is faulty. The cloud management platform sends detection information to the first service grid for a plurality of consecutive times. The detection information is used to detect a state of the first service grid. The state of the first service grid refers to whether the first service grid is faulty. If the cloud management platform receives abnormal response information from the first service grid for a plurality of consecutive times, the cloud management platform determines that the first service grid is faulty; or if the cloud management platform does not receive response information from the first service grid within a preset time period for a plurality of consecutive times, the cloud management platform determines that the first service grid is faulty.

It may be understood that the cloud management platform sends the detection information to the first service grid for a plurality of consecutive times in the following scenario: The cloud management platform sends the detection information to the first service grid, and the first service grid returns an abnormal response or the cloud management platform does not receive response information from the first service grid within a preset time period. To avoid that an occasional situation is considered as a first cloud service grid fault, the cloud management platform resends detection information to the first service grid. If results of a plurality of retries are that the first cloud service grid returns an abnormal response message or does not receive response information from the first service grid within a preset time period, it may be determined that the first service grid is faulty (that is, unhealthy).

Based on the foregoing method, the cloud management platform determines, in a plurality of manners, whether the first service grid is faulty, thereby enriching implementations of the technical solutions of this application. In addition, the cloud management platform needs to detect the service grid fault for a plurality of consecutive times, so that an occasional situation (for example, a network is temporarily unstable) can be avoided from being considered as a service grid fault, thereby improving accuracy of fault detection. In addition, when the first service grid is faulty, the cloud management platform updates the state information of the first service deck corresponding to the first service grid, and the updated state information indicates that the first service grid is faulty, so as to avoid service unavailability caused by forwarding the first call request to a faulty service grid. This provides an implementation basis for reducing an impact range of a fault, and improves implementability of the technical solutions of this application.

304: The cloud management platform sends the first call request to a second service grid.

When the updated state information indicates that the first service grid is faulty, the cloud management platform forwards the first call request to the second service grid in a normal working state based on the updated state information corresponding to the first service grid. The second service grid being in a normal working state may also be referred to as a second service grid being healthy.

Because the second service grid is in a normal working state, and in the technical solutions of this application, service grids at a same service deck also store same cloud service data, the cloud management platform can forward the first call request to the second service grid. The cloud service data refers to data related to the cloud service provided by the cloud management platform, including tenant information (for example, an account and a password), authentication information (a verification code), and other information that needs to be used in a process of calling the cloud service. This is not specifically limited herein.

In some optional implementations, service grids at a same service deck may store same cloud service data in a data synchronization manner. The synchronization manner includes real-time synchronization or quasi-real-time synchronization. This is not specifically limited herein.

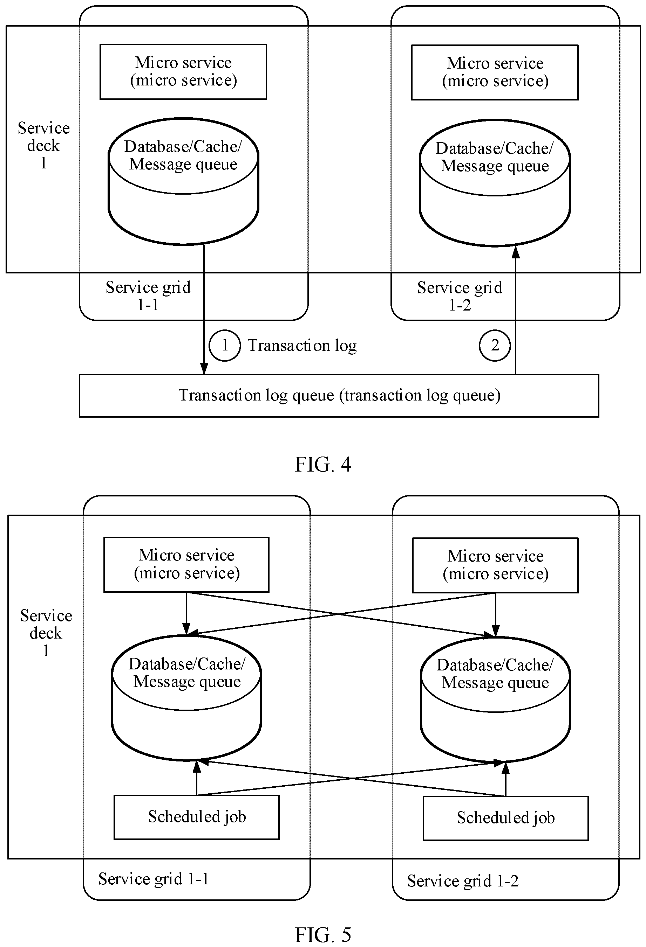

The following describes data synchronization between service grids with reference to diagrams. FIG. 4 and FIG. 5 are both diagrams of data synchronization according to an embodiment of this application.

As shown in FIG. 4, a transaction log queue (transaction log queue) may be maintained between every two adjacent service decks. When data is written to a database (database, DB), a cache (cache), or a message queue (message queue) of the first service grid, transaction logs (transaction logs) of software (the database/the cache/the message queue) are synchronized to another service grid or a plurality of service grids by using the transaction log queue, to complete data synchronization.

As shown in FIG. 5, a micro service that writes a state may be required to write the data to a service grid 1-2 when state data of a service grid 1-1 is written to the database/cache/message queue. For data that cannot be written in real time due to a service grid fault, a scheduled job can be started in the background of each service grid, to periodically scan the database/cache/message queue to make up for the data.

It should be noted that, FIG. 4 and FIG. 5 merely use an example in which one service deck includes two service grids. In actual application, one service deck may further include more service grids. A synchronization method is similar, and details are not described herein again.

It can be learned from the foregoing technical solutions that this application has the following advantages: A plurality of service grids at a same service deck store same cloud service data. The cloud management platform receives the first call request that is sent by the tenant and that corresponds to the first service deck. If the first service grid at the first service deck is faulty, the call request may be forwarded to the second service grid in a normal working state at the same service deck for processing, thereby reducing a blast radius of the fault, and ensuring normal running of the cloud service.

In some optional implementations, after the cloud management platform determines that the first call request corresponds to the first service deck (that is, after step 302), if each service grid at the first service deck is in a normal working state, the cloud management platform sends the first call request to the first service grid. Optionally, the first service grid herein may be a service grid that is at the first service deck and that is closest to an address location of the tenant or that has a minimum network latency with the tenant. This is not specifically limited herein.

Based on the foregoing method, when a plurality of service grids at the first service deck are in a normal working state, the cloud management platform may select a service grid that is closest to a tenant address location to forward the call request, to improve reliability of the cloud service; or the cloud management platform selects a service grid with a lowest network latency to forward the call request, to improve efficiency and a response speed of the cloud service.

In some optional implementations, the cloud management platform may obtain state information corresponding to a service deck by detecting a state of each service grid. In other words, the cloud management platform may further perform the following operations:

305: The cloud management platform sends first detection information to the first service grid.

The cloud management platform may add the first detection information to a hypertext transfer protocol (hypertext transfer protocol, HTTP) request, and the first detection information is used to detect whether the first service grid is faulty. Optionally, the cloud management platform may further add the first detection information to another request, for example, a user datagram protocol (user datagram protocol, UDP) request. This is not specifically limited herein.

306: The cloud management platform receives first response information from the first service grid.

In some optional implementations, after receiving the first detection information, the first service grid sends the first response information to the cloud management platform. The first response information indicates that the first service grid is in a normal working state.

307: The cloud management platform sends second detection information to the second service grid.

308: The cloud management platform receives the second response information from the second service grid.

Step 307 and step 308 are similar to step 305 and step 306, and details are not described herein again.

309: The cloud management platform stores the state information corresponding to the first service deck.

After receiving the first response information and the second response information, the cloud management platform stores the state information corresponding to the first service deck. It may be understood that, based on the foregoing brief description of step 305 to step 308, in step 309, the state information that corresponds to the first service deck and that is stored in the cloud management platform indicates that both the first service grid and the second service grid that correspond to the first service deck are in a normal working state.

In some optional implementations, when there are a plurality of service grids in a normal working state at the first service deck, the cloud management platform may select, based on a specific policy, a service grid for providing the cloud service. The following is an example for illustrating this case.

The cloud management platform may further receive a second call request sent by the tenant, and the second call request corresponds to the first service deck. A cloud service corresponding to the second call request may be the same as or different from the cloud service corresponding to the first call request. This is not specifically limited herein. The cloud management platform determines current state information of the first service deck, and when the current state information of the first service deck indicates that the plurality of service grids are in a normal working state, determines a target service grid from the plurality of service grids, and forwards the second call request to the target service grid. Optionally, the target service grid is a service grid that is in the plurality of service grids and that is closest to a tenant address location or has a lowest network latency with the tenant. This is not specifically limited herein.

Based on the foregoing method, when the plurality of service grids at the first service deck are in a normal working state, the cloud management platform may select a service grid that is closest to a tenant address location to forward the call request, to improve reliability of the cloud service; or the cloud management platform selects a service grid with a lowest network latency with the tenant to forward the call request, to improve efficiency and a response speed of the cloud service.

In some optional implementations, the cloud management platform further provides a configuration interface for the tenant, where the configuration interface is used to obtain the cloud service that is input or selected by the tenant. That is, the cloud service provided by the cloud management platform may match an actual requirement of the tenant, and is applicable to a condition or selection input by the tenant.

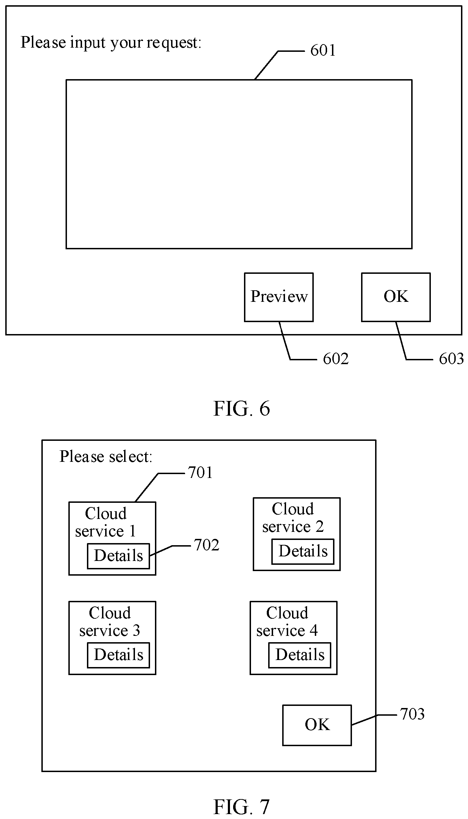

For example, the following describes, with reference to scenario diagrams, a simple process in which a tenant inputs or selects a cloud service. Both FIG. 6 and FIG. 7 are diagrams of interfaces of a cloud management platform according to an embodiment of this application.

As shown in FIG. 6, an interface of the cloud management platform includes an input box 601. The tenant may input a setting condition of a cloud service architecture in the input box 601, and the cloud management platform configures, in response to an operation instruction for the input box 601, the cloud service architecture that meets the setting condition.

For example, it is assumed that a tenant A needs to deploy a service with high reliability on the cloud. First, a service stack (including all resources and applications of the service) is created by using an automation tool, and then copies of three stacks are copied, to obtain four same service stacks. If the tenant A wants to evenly place the four same service stacks in two AZs and synchronize service stack data in the different AZs. In this case, the tenant A may input a configuration condition in the input box 601 as follows: The four same service stacks are defined as four service grids, the four same service stacks are evenly placed in the two AZs, and then any two service grids that are not in a same AZ are grouped into one service deck, and two formed service decks are named a service deck 0 and a service deck 1.

Based on the technical solutions provided in this application, the service of the cloud management platform sets, by default, a mutual backup relationship between stateful middleware in two different service grid stacks that belong to a same service deck.

Then, the tenant may further configure a routing scenario of the service. For example, a tenant whose ID of the service of the tenant A is divided by 2, a tenant whose remainder 0 is assigned to the service deck 0, and a tenant whose remainder 1 is assigned to the service deck 1. Based on the configuration, the service automatically routes requests of different tenants using the cloud service to the service deck 0 and the service deck 1.

It can be learned from the foregoing description that in the technical solutions of this application, regardless of whether it is in a public cloud or a private cloud, a service can be provided in a form of a cloud service. The service may enable a customer to define a logical set (that is, decks) obtained through data dimension division and a set (that is, grids) obtained through cluster deployment. Alternatively, configuration may be defined for the customer, to route a message to different decks and grids.

In some optional implementations, the interface of the cloud management platform further includes a preview control 602. The tenant taps the control, and the cloud management platform may display a diagram of the cloud service architecture that meets the setting condition input by the tenant. The diagram may be similar to the diagram of the cloud service architecture shown in FIG. 1, so that the tenant can intuitively perceive the cloud service architecture.

In some optional implementations, the interface of the cloud management platform further includes a determining control 603. The tenant taps the determining control 603, and the cloud management platform may actually deploy the cloud service architecture that meets the setting condition input by the tenant.

In some optional implementations, configuration information input by the tenant is further used to indicate a mapping relationship among a tenant identifier, a service deck, and a service grid. Specifically, the mapping relationship includes a mapping relationship between the tenant identifier and the service deck and a mapping relationship between the service deck and the service grid. The mapping relationship between the tenant identifier and the service deck may be used to perform track routing on the tenant. The mapping relationship between the service deck and the service grid includes information such as a quantity of service grids included in one service deck. Based on the configuration information, the cloud management platform deploys at least two tenant identifiers and at least two service grids that correspond to each service deck.

In some optional implementations, the configuration information may be a rule or a self-defined algorithm, so that a computing device evenly divides the tenant identifiers into different service decks as much as possible. For example, it is assumed that for a ticket purchase cloud service, track routing may be performed on tenants based on end numbers of tenant accounts. For example, tenants whose end numbers are odd numbers are mapped to a same service deck, and tenants whose end numbers are even numbers are mapped to another service deck. A quantity of service grids included in each service deck is not limited either, provided that the quantity is greater than one.

As shown in FIG. 7, the interface of the cloud management platform includes a candidate box 701, and each candidate box indicates a cloud service architecture. The tenant taps a details control 702, and the cloud management platform responds to a touch instruction for the details control 702, and displays detailed information about a corresponding cloud service architecture (for example, a quantity of service decks included in the cloud service architecture and a quantity of service grids included in each service deck). The interface of the cloud management platform further includes a determining control 703. The tenant taps the determining control 703, and the cloud management platform may actually deploy a cloud service architecture that meets tenant selection.

It should be noted that, FIG. 6 and FIG. 7 are merely examples of the interface of the cloud management platform, and specific content of the interface is not limited. In actual application, the specific content may be flexibly set, and is not specifically limited herein.

It should be noted that, in a process of calling the cloud service, the tenant may not be aware of a data track routing process. For example, it is assumed that a cloud service call request initiated by the tenant is a ticket purchase request. The tenant logs in to ticket purchase software and taps to purchase, and a terminal device directly displays a ticket purchase interface. However, in the background, actually, the cloud service call request corresponding to the ticket purchase is sent to the computing device, and the computing device determines a corresponding service deck based on the tenant identifier, and then forwards the request to a service grid that is in a normal working state and that is at the service deck.

In some optional implementations, each service grid at the service deck can provide a cloud service for a plurality of tenants. The following provides descriptions with reference to a specific application scenario.

For example, it is assumed that a first cloud service requested by a first tenant is a ticket purchase service, and the first tenant corresponds to a first service deck. When a first service grid included in the first service deck is in a normal working state, the first service grid provides a ticket purchase service. If the first service grid is faulty, a terminal that logs in to a first tenant account may display a refreshed interface, so that the first tenant re-initiates a ticket purchase service. In this case, the cloud management platform switches the service grid that provides the ticket purchase service to a second service grid, so that the first tenant can smoothly use the ticket purchase service. If the terminal that logs in to a second tenant account also initiates a ticket purchase service, after failover, a second tenant may also complete ticket purchase by using the second service grid. Optionally, one service grid can provide different cloud services. The first tenant may sequentially request a ticket purchase service and a song listening service. The first tenant corresponds to a target service deck. When the first service grid is in a normal working state, the first service grid provides the ticket purchase service and the song listening service.

In some optional implementations, the cloud service provided by the cloud management platform includes an elastic cloud service, a cloud hard disk service, a virtual private cloud service, a cloud database service, or a distributed cache service. This is not specifically limited herein.

Based on the foregoing method, the cloud management platform can provide a plurality of types of cloud services, thereby better meeting a diversity of tenant service development.

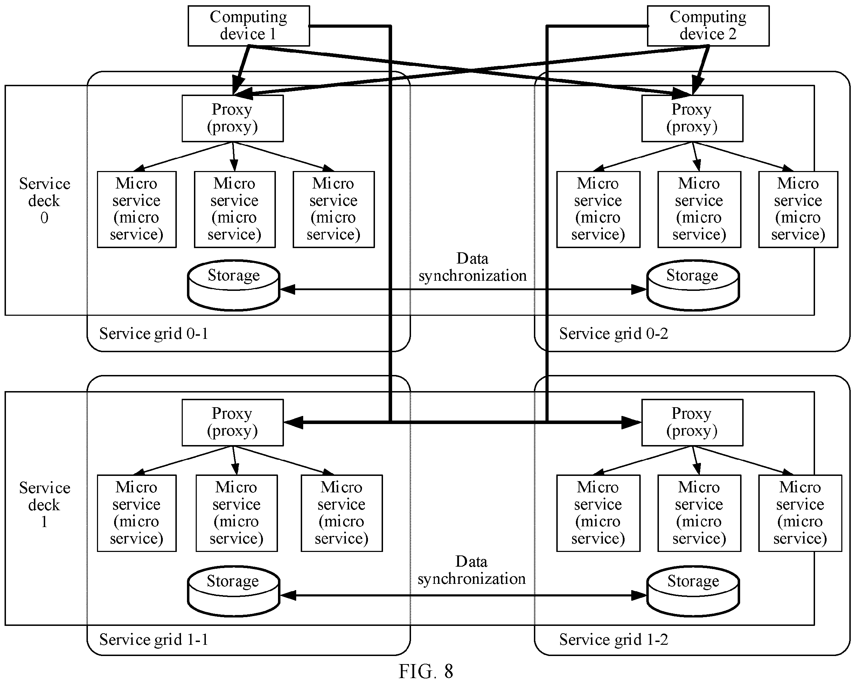

The following further describes a cloud service architecture with reference to a diagram. FIG. 8 is a diagram of a cloud service architecture according to an embodiment of this application.

For example, in FIG. 8, that a specific cloud service architecture is split into two service decks and each service deck has two service grids is used as an example. In actual application, a cloud service may correspond to more service decks, and each service deck may correspond to more service grids. This is not specifically limited herein.

A service cluster with complete functions is deployed in each service grid, including all micro services, related middleware, data storage, and the like. The data storage may be implemented in a plurality of manners, and may be a database (database, DB) or a message queue (message queue). In addition, the data storage may be implemented in another manner, for example, implemented by using a cache (cache). This is not specifically limited herein. A proxy is configured to distribute data. After receiving a cloud service call request, the proxy distributes the cloud service call request to a corresponding micro service for processing.

Different service grids deployed at a same service deck can synchronize data in a message mode to form a read-once-write-many or active/standby relationship. Data synchronized by different service grids is cloud service data, including tenant information (for example, an account and a password), authentication information (for example, a verification code), permission information, or other information that may be used when a tenant initiates a cloud service call request. This is not specifically limited herein.

As shown in FIG. 8, a computing device running a cloud management platform is deployed outside a service deck and a service grid, and is used as a general component to route a request of the cloud service. The computing device may route the cloud service call request to any service grid at any service deck.

It should be noted that, FIG. 8 is merely an example. In actual application, more or fewer computing devices may be further included. This is not specifically limited herein.

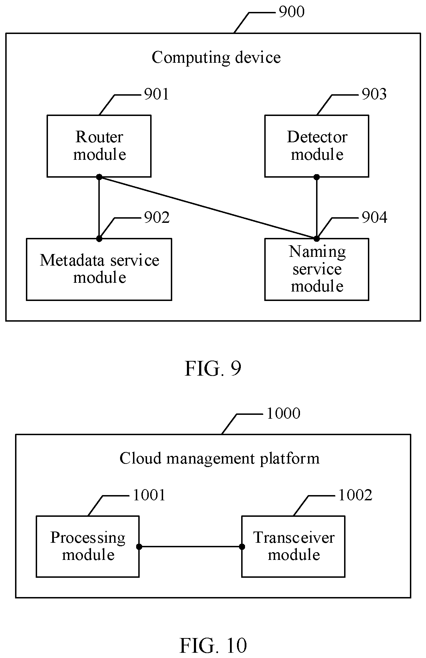

In this embodiment of this application, the computing device may be logically divided. The following provides description with reference to a diagram. FIG. 9 is a diagram of a structure of a computing device according to an embodiment of this application.

As shown in FIG. 9, the computing device 900 includes a router (router) module 901, a metadata service (metadata service) module 902, a detector (detector) module 903, and a naming service (naming service) module 904.

The router module 901 may be considered as a core module of the computing device 900, and is configured to allocate cloud service call requests to different service decks/service grids based on logical data partitions. In a common case, if the cloud service exposes an HTTP/HTTPS interface, the router module 901 may be a deck-7 proxy, and may route an HTTP/HTTPS (1.1/2.0) request to different backends. If the cloud service exposes an interface of another protocol (for example, a UDP protocol), the router module 901 may also route the another protocol to different backends, provided that a message routing function can be completed. This is not specifically limited herein.

The metadata service module 902 is configured to store a logical data partitioning relationship, that is, store a mapping relationship between a service deck and a tenant identifier. For example, in a typical tenant-based data partitioning implementation, the metadata service module 902 may store a mapping relationship between a tenant ID and a service deck, and a mapping relationship between a service deck and a service grid.

Optionally, a data partitioning relationship (that is, the mapping relationship between the tenant identifier and the service deck) may be determined by using a rule/configuration (for example, a self-defined algorithm). Optionally, the mapping relationship between each tenant identifier and a service deck may also be stored in the metadata service module 902 as a key-value pair.

In some optional implementations, the metadata service module 902 may maintain a protocol, and when data of the metadata service module 902 is updated (that is, the mapping relationship between the tenant identifier and a service deck is updated), the update is pushed to the router module 901, so that the router module 901 also maintains a cache of the data in the metadata service module 902. In other words, the router module 901 may also store and update the mapping relationship between the tenant identifier and the service deck. In this way, it can be ensured that a crash of the metadata service module 902 does not affect normal running of the computing device.

The detector module 903 is configured to dynamically detect a health state of each service grid, and update data in the naming service module 904 after a service grid is faulty, that is, update state information corresponding to a service deck at which the faulty service grid is located. In some optional implementations, the detector module 903 may continuously poll each service grid by setting some fixed test requests (for example, an HTTPS request), and when it is determined that a service grid is faulty, update data in the naming service module 904. In addition, in a case in which a service grid is actively disabled, the detector module 903 may alternatively be notified by manually inputting a command or by other means, so that the detector module 903 updates data in the naming service module 904.

The naming service module 904 is configured to store a health state of each service grid at a service deck, that is, store state information corresponding to each service deck.

When the router module 901 expects to forward the cloud service call request, the router module 901 first obtains a service deck to which the cloud service call request should be sent. Then, a health state of each service grid at the service deck is obtained from the naming service module 904, so as to select a healthy service grid, and complete mapping from the cloud service call request to the service grid. The healthy service grid is a service grid in a normal working state.

It should be noted that, in an implementation of the technical solutions of this application, in addition to the public cloud or the private cloud mentioned above, a service can be provided in a form of a cloud service. The service may enable a tenant to define a logical set (that is, decks) obtained through data dimension division and a set (grids) obtained through cluster deployment. Alternatively, configuration may be defined for the tenant, to route a message to different decks and grids. In addition, the technical solutions of this application may further provide an architecture implementation based on a software manner. In the architecture implementation, a tenant can define a logical set (decks) obtained through data dimension division and a set (grids) obtained through cluster deployment. Elements (clusters) in the set obtained through cluster deployment may synchronize statues with each other in a specific manner. General-purpose software or hardware may be further provided in a software or hardware manner. The general-purpose software or hardware may be configured for a customer, so that a message is routed to the logical set (decks) obtained through different data dimension division and the set (grids) obtained through cluster deployment. This is not specifically limited herein.

According to the foregoing cloud technology-based fault processing method, an embodiment of the present invention further discloses an internal structure of a cloud management platform. For details, refer to the following content.

FIG. 10 is a diagram of a structure of a cloud management platform according to an embodiment of this application.

A cloud service architecture provided by the cloud management platform includes at least a first service deck, the first service deck includes at least a first service grid and a second service grid, and the first service grid and the second service grid store same cloud service data.

As shown in FIG. 10, the cloud management platform 1000 includes a processing module 1001 and a transceiver module 1002.

The transceiver module 1002 is configured to receive a first call request sent by a tenant.

The processing module 1001 is configured to determine that the first call request corresponds to the first service deck.

The transceiver module 1002 is further configured to: when the first service grid is faulty, forward the first call request to the second service grid. The second service grid is in a normal working state.

In some optional implementations, the processing module 1001 is further configured to update state information of each service grid at the first service deck. The state information indicates whether each service grid at the first service deck is faulty.

In some optional implementations, the first call request carries an identifier of a tenant. The processing module 1001 is further configured to determine, based on the identifier of the tenant and a mapping relationship between the identifier and a service deck, that the tenant corresponds to the first service deck.

In some optional implementations, the processing module 1001 is further configured to: when each service grid at the first service deck is in a normal working state, send the first call request to the first service grid. The first service grid is closest to an address location of the tenant or a network latency between the first service grid and the tenant is minimum.

In some optional implementations, the processing module 1001 is further configured to provide a configuration interface for the tenant, where the configuration interface is used to obtain a cloud service that is input or selected by the tenant.

In some optional implementations, the transceiver module 1002 is specifically configured to send detection information to the first service grid for a plurality of consecutive times. The detection information is used to detect a state of the first service grid. The processing module 1001 is specifically configured to: if abnormal response information from the first service grid is received for a plurality of consecutive times, determine that the first service grid is faulty; or if response information from the first service grid is not received for a plurality of consecutive times within a preset time period, determine that the first service grid is faulty.

In some optional implementations, the cloud service includes an elastic cloud service, a cloud hard disk service, a virtual private cloud service, a cloud database service, or a distributed cache service.

In some optional implementations, the transceiver module 1002 is further configured to receive a second call request sent by the tenant. The second call request corresponds to the first service deck. A cloud service corresponding to the second call request may be the same as or different from the cloud service corresponding to the first call request. This is not specifically limited herein. The processing module 1001 is further configured to: determine current state information of the first service deck, and when the current state information of the first service deck indicates that a plurality of service grids are all in a normal working state, determine a target service grid from the plurality of service grids. Optionally, the target service grid is a service grid that is in the plurality of service grids and that is closest to a tenant location or has a lowest latency. This is not specifically limited herein. The transceiver module 1002 is further configured to forward the second call request to the target service grid.

It should be noted that, both the processing module 1001 and the transceiver module 1002 may be implemented by using software or hardware. For example, the following uses the processing module 1001 as an example to describe an implementation of the processing module 1001. Similarly, for an implementation of the transceiver module 1002, refer to the implementation of the processing module 1001.

When the processing module 1001 is implemented by using software, the processing module 1001 may be an application or a code block that runs on a computer device. The computer device may be at least one of computing devices such as a physical host, a virtual machine, and a container. Further, there may be one or more computer devices. For example, the processing module 1001 may be an application that runs on a plurality of hosts/virtual machines/containers. It should be noted that, the plurality of hosts/virtual machines/containers used to run the application may be distributed in a same AZ, or may be distributed in different AZs. The plurality of hosts/virtual machines/containers used to run the application may be distributed in a same region, or may be distributed in different regions. This is not specifically limited herein.

Similarly, the plurality of hosts/virtual machines/containers used to run the application may be distributed in a same virtual private cloud (virtual private cloud, VPC), or may be distributed in a plurality of VPCs. Generally, one region may include a plurality of VPCs, and one VPC may include a plurality of AZs.

When the processing module 1001 is implemented by using hardware, the processing module 1001 may include at least one computing device, such as a server. Alternatively, the processing module 1001 may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the processing module 1001 may be distributed in a same AZ, or may be distributed in different AZs. The plurality of computing devices included in the processing module 1001 may be distributed in a same region, or may be distributed in different regions. Similarly, the plurality of computing devices included in the processing module 1001 may be distributed in a same VPC, or may be distributed in a plurality of VPCs. The plurality of computing devices may be any combination of computing devices such as a server, an ASIC, a PLD, a CPLD, an FPGA, and a GAL.

The cloud management platform 1000 may perform the operations performed by the cloud management platform in the embodiments shown in FIG. 1 to FIG. 9, and details are not described herein again.

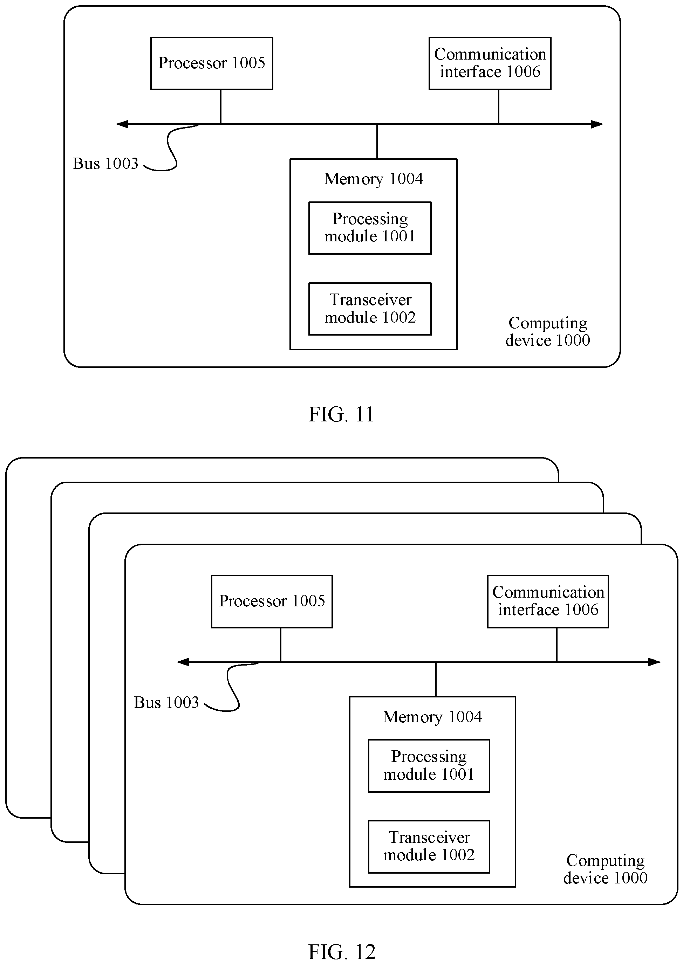

FIG. 11 is a diagram of a structure of a computing device according to an embodiment of this application.

As shown in FIG. 11, the computing device 1000 includes a bus 1003, a processor 1005, a memory 1004, and a communication interface 1006. The processor 1005, the memory 1004, and the communication interface 1006 communicate with each other through the bus 1003. The computing device 1000 may be a server or a terminal device. It should be understood that quantities of processors and memories in the computing device 1000 are not limited in the present invention.

The bus 1003 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1003 may include a path for transmitting information between components (for example, the memory 1004, the processor 1005, and the communication interface 1006) of the computing device 1000.

The processor 1005 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1004 may include a volatile memory (volatile memory), for example, a random access memory (random access memory, RAM). The processor 1005 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1004 stores executable program code, and the processor 1005 executes the executable program code to separately implement functions of the processing module 1001 and the transceiver module 1002, so as to implement a cloud technology-based fault processing method. That is, the memory 1004 stores instructions used by a cloud management platform to perform the cloud technology-based fault processing method.

The communication interface 1006 uses a transceiver unit, for example, but not limited to, a network interface card or a transceiver, to implement communication between the computing device 1000 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

FIG. 12 is a diagram of a structure of a computing device cluster according to an embodiment of the present invention.

As shown in FIG. 12, the computing device cluster includes at least one computing device 1000. A memory 1004 in the one or more computing devices 1000 in the computing device cluster may store same instructions used by a cloud management platform to execute a cloud technology-based fault processing method.

It should be noted that, memories 1004 of different computing devices in the computing device cluster may store different instructions to perform some functions of the cloud management platform. In other words, instructions stored in the memories 1004 of the different computing devices 1000 may implement functions of one or two of the processing module 1001 and the transceiver module 1002.

An embodiment of the present invention further provides a computer program product including instructions. The computer program product may be a software or program product that includes instructions and that can run on a computing device or be stored in any usable medium. When the computer program product runs on at least one computer device, the at least one computer device is enabled to perform the foregoing cloud technology-based fault processing method applied to the cloud management platform.

An embodiment of the present invention further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing cloud technology-based fault processing method applied to the cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A cloud technology-based fault processing method, wherein the method is applied to a cloud service, a cloud service architecture comprises at least a first service deck, the first service deck comprises at least a first service grid and a second service grid, the first service grid and the second service grid store same cloud service data, and the method comprises:
receiving a first call request sent by a tenant, and determining that the first call request corresponds to the first service deck; and
when the first service grid is faulty, forwarding the first call request to the second service grid, wherein the second service grid is in a normal working state.

2. The method according to claim 1, wherein after the first service grid is faulty, the method further comprises:
updating state information of each service grid at the first service deck, wherein the state information indicates whether each service grid at the first service deck is faulty.

3. The method according to claim 1 or 2, wherein the first call request carries an identifier of the tenant, and the determining that the first call request corresponds to the first service deck specifically comprises:
determining, based on the identifier of the tenant and a mapping relationship between the identifier and a service deck, that the first call request corresponds to the first service deck.

4. The method according to any one of claims 1 to 3, wherein after the determining that the first call request corresponds to the first service deck, the method further comprises:
when each service grid at the first service deck is in a normal working state, sending the first call request to the first service grid, wherein the first service grid is closest to an address location of the tenant or a network latency between the first service grid and the tenant is minimum.

5. The method according to any one of claims 1 to 4, wherein the method further comprises:
providing a configuration interface for the tenant, wherein the configuration interface is used to obtain the cloud service that is input or selected by the tenant.

6. The method according to any one of claims 1 to 5, wherein determining that the first service grid is faulty specifically comprises:
sending detection information to the first service grid for a plurality of consecutive times, wherein the detection information is used to detect a state of the first service grid; and
if abnormal response information from the first service grid is received for a plurality of consecutive times, determining that the first service grid is faulty; or if response information from the first service grid is not received for a plurality of consecutive times within a preset time period, determining that the first service grid is faulty.

7. The method according to any one of claims 1 to 6, wherein the cloud service comprises an elastic cloud service, a cloud hard disk service, a virtual private cloud service, a cloud database service, or a distributed cache service.

8. A cloud management platform, wherein a cloud service architecture provided by the cloud management platform comprises at least a first service deck, the first service deck comprises at least a first service grid and a second service grid, the first service grid and the second service grid store same cloud service data, and the cloud management platform comprises:
a transceiver module, configured to receive a first call request sent by a tenant; and
a processing module, configured to determine that the first call request corresponds to the first service deck, wherein
the transceiver module is further configured to: when the first service grid is faulty, forward the first call request to the second service grid, wherein the second service grid is in a normal working state.

9. The cloud management platform according to claim 8, wherein the processing module is further configured to update state information of each service grid at the first service deck, wherein the state information indicates whether each service grid at the first service deck is faulty.

10. The cloud management platform according to claim 8 or 9, wherein the first call request carries an identifier of the tenant; and
the processing module is further configured to determine, based on the identifier of the tenant and a mapping relationship between the identifier and a service deck, that the tenant corresponds to the first service deck.

11. The cloud management platform according to any one of claims 8 to 10, wherein the processing module is further configured to: when each service grid at the first service deck is in a normal working state, send the first call request to the first service grid, wherein the first service grid is closest to an address location of the tenant or a network latency between the first service grid and the tenant is minimum.

12. The cloud management platform according to any one of claims 8 to 11, wherein the processing module is further configured to provide a configuration interface for the tenant, wherein the configuration interface is used to obtain the cloud service that is input or selected by the tenant.

13. The cloud management platform according to any one of claims 8 to 12, wherein the transceiver module is specifically configured to send detection information to the first service grid for a plurality of consecutive times, wherein the detection information is used to detect a state of the first service grid; and
the processing module is specifically configured to: if abnormal response information from the first service grid is received for a plurality of consecutive times, determine that the first service grid is faulty; or if response information from the first service grid is not received for a plurality of consecutive times within a preset time period, determine that the first service grid is faulty.

14. The cloud management platform according to any one of claims 8 to 13, wherein the cloud service comprises an elastic cloud service, a cloud hard disk service, a virtual private cloud service, a cloud database service, or a distributed cache service.

15. A computing device cluster, comprising at least one computing device, wherein each computing device comprises a processor and a memory; and
a processor in the at least one computing device is configured to execute instructions stored in a memory in the at least one computing device, to enable the computing device cluster to perform the method according to any one of claims 1 to 7.

16. A computer program product comprising instructions, wherein when the instructions are run by a computer device cluster, the computer device cluster is enabled to perform the method according to any one of claims 1 to 7.

17. A computer-readable storage medium, comprising computer program instructions, wherein when the computer program instructions are executed by a computing device cluster, the computing device cluster performs the method according to any one of claims 1 to 7.
